# EUROPÄISCHE PATENTSCHRIFT

(11) **EP 2 229 492 B1**
(45) Veröffentlichungstag und Bekanntmachung des Hinweises auf die Patenterteilung: **27.06.2012**
(21) Anmeldenummer: 07857847.3
(22) Anmeldetag: 19.12.2007
(51) Int. Cl.: E04H 15/60, F16L 21/02

(54) **ROHRVERBINDUNG**
PIPE CONNECTION
RACCORD TUBULAIRE

(43) Veröffentlichungstag der Anmeldung: 22.09.2010
(73) Patentinhaber: Skincom AG, 6330 Baar (CH)
(72) Erfinder: FISCHER, Roland J., 8142 Uitikon Waldegg (CH); FUZHUANG, Li, Jiangmen City 529100 (CN)
(74) Vertreter: OK pat AG
(86) Internationale Anmeldenummer: PCT/EP2007/064226
(87) Internationale Veröffentlichungsnummer: WO 2009/077009

(56) Entgegenhaltungen:
- DE-A1-102005 048 272
- DE-U1- 8 703 940
- DE-U1- 20 020 263
- US-A- 5 083 882
- US-A- 5 409 122

## Beschreibung

Die vorliegende Erfindung bezieht sich auf eine Rohrverbindung für das Verbinden von verschiedenen Rohren, um eine selbsttragende röhrenartige Struktur, wie z.B. eine Zeltstruktur, eine Standbaustruktur, zu bilden.

In dem Fachgebiet von Zeltstrukturen und röhrenartigen Strukturen beim Standbau gibt es verschiedene Methoden, um die Rohre dieser Strukturen zu verbinden. Die einfachste dieser Methoden ist es ein Ende eines Rohres mit einem kleineren Durchmesser in das entsprechende Ende eines nächsten Rohres einzustecken, das einen grösseren Durchmesser hat. Diese Methode hat jedoch verschiedene Einschränkungen was das Profil des Rohrendes anbelangt und kann nicht gleichzeitig eine feste Verbindung und eine einfache, problemlose Demontage garantieren. Zusätzlich, wenn die Rohre flexibel sind, ist eine solche Verbindung nicht zuverlässig, da sich die Rohre lösen können.

Es sind auch andere Rohrverbindungen bekannt, die zwischen zwei Rohre eingesteckt sind und die beide Rohre durch Reibung zusammen halten, z.B. aus DE 200 20 263 U1, welches eine röhrenartige Struktur entsprechend dem Oberbegriff des Anspruch 1 zeigt. Es ist ein Nachteil dieser meist länglichen Verbindungen, dass sie auch keine zuverlässige und stabile Verbindung garantieren und vor allem, dass sie nicht das Verdrehen der Rohre gegeneinander "Scherwirkung" verhindern können.

Die Aufgabe der vorliegenden Erfindung ist es daher, eine Rohrverbindung für eine röhrenartige Struktur zu erstellen, die eine sehr feste, sichere aber trotzdem einfache Verbindung von Rohren erlaubt und die gleichzeitig das Verdrehen der Rohre gegeneinander verhindern kann.

Diese Aufgabe wird gemäss der Erfindung durch eine zylinderförmige Rohrverbindung gelöst, die einen umlaufenden Steg, der als axiale Anschlagsfläche für Stirnenden der beiden Rohre dient und der auf jeder Seite mindestens eine Nase aufweist, die in einen entsprechenden Ausschnitt an dem Stirnende des jeweiligen Rohres eingreifen, um ein Verdrehen der Rohre gegeneinander zu verhindern, umfasst. Die Festigkeit der Verbindung ist garantiert indem flexible Endstücke vorgesehen sind, die sich dadurch ergeben, dass Spalten in den Stirnflächen der Endstücke vorgesehen sind. Die Endstücke umfassen je eine Radialbohrung, die je ein Schraubelement aufnehmen. Um die Rohrverbindung in dem Inneren der Rohre festzuklemmen, sind diese Schraubelemente durch Öffnungen im Zylindermantel des Rohres einschraubbar, um die flexiblen Endstücke auseinander zu biegen. Die Schraubelemente können aber auch etwas herausgeschraubt werden, um die Rohrverbindung im Zylindermantel zu befestigen.

Der wichtigste Vorteil der Erfindung ist, dass diese Rohrverbindung sehr einfach und schnell einsetzbar ist, und dass die Verbindung zwischen den Rohren selber und mit der Rohrverbindung trotzdem sehr fest und zuverlässig ist. Zusätzlich kann die Rohrverbindung leicht aus dem Inneren der Rohre herausgezogen werden, nachdem man das Schraubelement hinein- oder herausgeschraubt hat.

Ein weiterer Vorteil der Erfindung ist die grosse Zahl von verschiedenen möglichen Anwendungsgebieten wo die Rohrverbindung zum Einsatz kommen kann. Ausserdem kann die erfindungsgemässe Rohrverbindung in sehr verschiedenen Grössen und aus verschiedenen Materialien hergestellt werden. Zum Beispiel wenn die Rohre, welche die Rohrverbindung verbinden soll, flexibel sind und wenn die ganze Struktur flexibel sein soll, dann kann man auch die Rohrverbindung aus flexiblen Kunststoffen herstellen. Dadurch kann man die Flexibilität der gesamten Struktur garantieren. Anderseits, bei sehr stabilen Konstruktionen, wie z.B. Bühnen oder ähnlichen Aufbauten und Gerüsten, werden die Rohrverbindungen vorzugsweise aus Metall oder faserverstärktem Kunststoff hergestellt.

Weitere Einzelheiten und Vorteile der Erfindung werden im Folgenden anhand von Ausführungsbeispielen und mit Bezug auf die Zeichnung beschrieben. Es zeigen:
- **Fig. 1**: eine schematische Perspektivansicht der Rohrverbindung gemäss Erfindung;
- **Fig. 2**: eine schematische Seitenansicht der Rohrverbindung gemäss Erfindung;
- **Fig. 3**: eine schematische Perspektivansicht die illustriert wie die Rohrverbindung, gemäss Erfindung, zwei Rohre verbindet;
- **Fig. 4**: eine schematische Perspektivansicht zur Illustration einer möglichen Verwendung einer Mehrzahl von Rohrverbindungen gemäss Erfindung.

### DETAILLIERTE BESCHREIBUNG

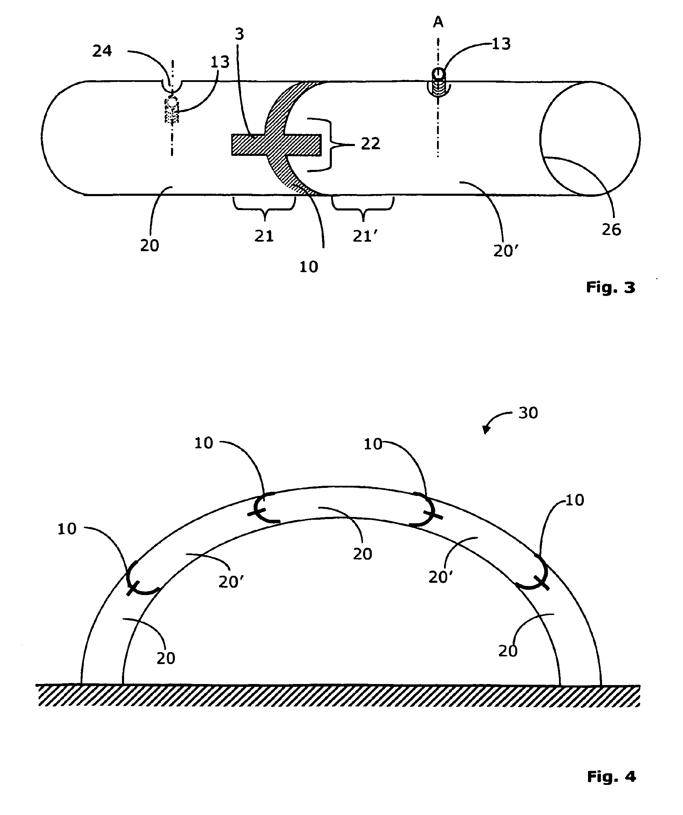

Die Erfindung bezieht sich auf eine Rohrverbindung 10 für das einfache, schnelle und betriebssichere Verbinden von Rohren 20, 20', Rundstäben oder allgemein hohlen länglichen Bauelementen. Die Rohre, Rundstäbe und hohle längliche Bauelemente werden im Folgenden der Einfachheit halber als Rohre 20, 20' bezeichnet. Die Erfindung ist besonders gut geeignet für eine Verbindung von zwei hohlen Zeltrohren von grossen Zelten, wobei eine Mehrzahl von Rohren 20, 20' mit mehreren Rohrverbindungen 10 verbunden ist, um eine selbstständige Tragkonstruktion 30 zu bilden (siehe z.B. Fig. 4). Gemäss Erfindung handelt es sich um einstückige Elemente (vorzugsweise Kunststoffelemente oder Metallelemente), die als Rohrverbindungen 10 dienen.

Der Gegenstand der Erfindung ist eine röhrenartige Struktur 30 mit mindestens zwei Rohren 20, 20' und mit einem länglichen dreidimensionalen zylinderförmigen Element, die Rohrverbindung 10, die in das Innere eines Rohres 20, 20' einsteckbar ist. Die Rohrverbindung 10 verbindet zwei Rohre 20, 20', indem man sie zwischen zwei Rohre 20 und 20' in das Innere der Stirnenden der Rohre 21, 21' hineinsteckt und dann, mittels in den folgenden Paragraphen beschriebene Methoden, die Rohrverbindung 10 in Inneren der Stirnenden 21, 21' festklemmt.

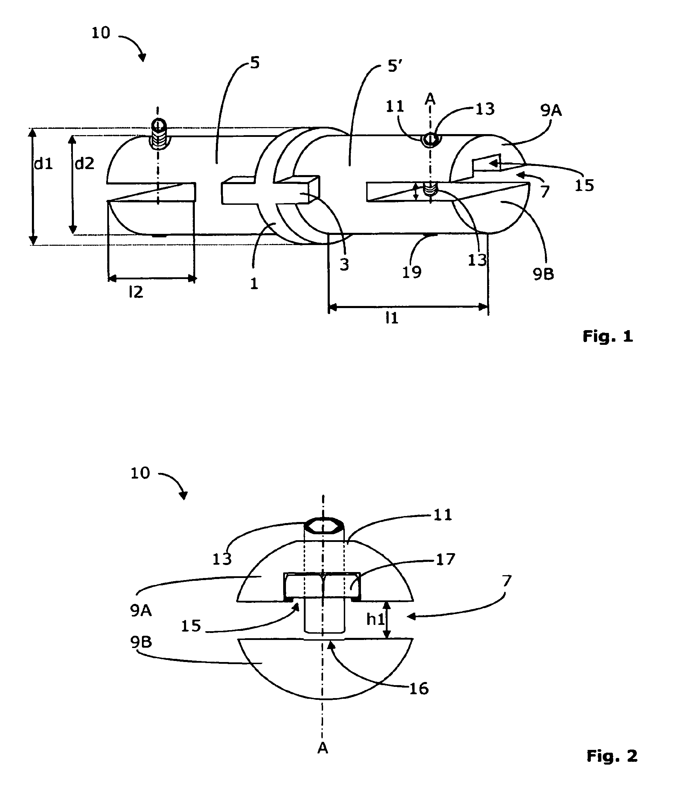

Figur 1 zeigt die bevorzugte Ausführungsform der Rohrverbindung. Wie Fig.1 zeigt, umfasst die Rohrverbindung 10 in einem mittleren Abschnitt einen unlaufenden Steg 1. Dieser Steg 1 hat vorzugsweise eine Höhe (d1-d2)/2, die ungefähr mit der Dicke des Zylindermantels 26 (Wandstärke des Rohres 20 oder 20') übereinstimmt, d.h. der Durchmesser d2 entspricht ungefähr dem Aussendurchmesser der Rohre 20, 20' ist. Dies ist bevorzugt, um einen nahtlosen Übergang zwischen den Rohren 20 und 20' zu ermöglichen. Im Fall wenn die zwei zu verbindenden Rohre 20 und 20' unterschiedliche Durchmesser haben, kann eine weitere Ausführungsform der Rohrverbindung zum Einsatz kommen, die nicht symmetrisch ist, d.h. die zwei Zylinderabschnitte 5, 5' aufweist, die verschiedene Durchmesser d2 haben. In diesem Fall ist der zentral umlaufende Steg 1 konisch und der Durchmesser an einer Seite des Steges 1 entspricht dem Durchmesser des ersten Rohres 20 und der Durchmesser der anderen Seite des Steges 1 entspricht dem Durchmesser des zweiten Rohres 20'. In diesem Fall kann die Rohrverbindung 10 auch als Übergangselement zwischen zwei verschiedenen Rohren 20, 20' benutzt werden.

Der Steg 1 dient auch als axiale Anschlagsfläche für die Stirnenden 21, 21' der Rohre 20, 20', d.h. die Seiten des Steges sollten an die Stirnenden 21, 21' präzis angepasst sein. In der bevorzugten Ausführungsform der Rohrverbindung 10, ist im Bereich des Steges 1 auf jeder Seite des Steges 1 mindestens eine, aber bevorzugweise zwei Nasen 3 vorgesehen. Diese Nasen 3 sind direkt mit dem Steg 1 verbunden und vorzugweise haben sie gleiche Höhe wie der Steg 1. Diese Nasen 3 sind so ausgebildet, dass sie in einen entsprechenden Ausschnitt 22 an dem Stirnende 21, 21' des jeweiligen Rohres 20, 20' eingreifen. Dieses besondere Merkmal ist sehr wichtig, weil es eine der Angaben der Erfindung löst. Durch diese in die Ausschnitte 22 eingreifenden Nasen 3, wird ein Verdrehen der Rohre 20, 20' gegeneinander verhindert. Die Nasen 3 sind axiale Erweiterungen oder Ausdehnungen des Steges 1, die in den entsprechenden Ausschnitt 22 eingreifen. Wenn diese Nasen 3 genügend lang und fest sind und sie sich in den Ausschnitt 22 nicht bewegen können, dann ist eine Verdrehung der Rohre 20, 20' gegen die Rohrverbindung 10 selbst nicht möglich.

In der meist allgemeinen Ausführungsform der Erfindung ist, wie Fig. 1 zeigt, die Rohrverbindung 10 symmetrisch zu dem umlaufenden Steg 1 ausgebildet, d.h. die Rohrverbindung 10 hat auf jeder Seite des Steges 1 einen Zylinderabschnitt 5, 5'. Diese Zylinderabschnitte 5, 5' sind in das Innere des jeweiligen Rohres 20 und 20' einsteckbar, d.h. der Durchmesser d2 der Zylinderabschnitte 5, 5' entspricht ungefähr dem Innendurchmesser der Rohre 20, 20'. Um die Zylinderabschnitte 5, 5' leicht in das Innere der Rohre 20, 20' einstecken zu können, ist der Durchmesser d2 ein wenig kleiner als der Innendurchmesser der Rohre 20, 20'.

Im Fall wenn die zwei zu verbindenden Rohre 20 und 20' unterschiedliche Innendurchmesser haben, sind die zwei Zylinderabschnitte 5, 5' nicht symmetrisch, d.h. sie haben auch verschiedene Durchmesser d2, damit jeder Zylinderabschnitt 5 oder 5' in das entsprechende Rohr 20 oder 20' hineinpasst.

Um eine feste Verbindung zwischen den Rohren 20 und 20' zu erzielen, ist es bevorzugt, dass die Länge l1 mindestens zweimal dem Durchmesser d2 entspricht. Je länger der Zylinderabschnitt 5, 5' ist, desto geringer ist die Möglichkeit, dass sich der Zylinderabschnitt 5, 5' der Rohrverbindung 10 in dem Rohr 20, 20' biegt/bewegt.

Jeder Zylinderabschnitt 5, 5' weist einen axialen Spalt 7 auf, der sich von einer Stirnendfläche des Zylinderabschnitts 5, 5' in Richtung eines mittleren Abschnitts erstreckt. Die Rolle dieses Spaltes 7 ist es oberhalb und unterhalb des Spaltes 7 erste flexible Endstücke 9A und zweite flexible Endstücke 9B bereit zu stellen.

Das erste flexible Endstück 9A ist mit einer Radialbohrung 11 versehen. Durch diese Radialbohrung 11 kann ein Schraubelement 13 eingeschraubt werden. Zum Festklemmen der Rohrverbindung 10 im Rohr 20 oder 20' gibt es zwei verschiedene Möglichkeiten:
- a) in der bevorzugten Ausführungsform der Erfindung, ist das Schraubelement 13 so tief durch die Radialbohrung eingeschraubt, dass es gegen die Oberfläche 16 des zweiten flexiblen Endstücks 9B drückt. Dieser Druck biegt dann die Endstücke 9A und 9B auseinander, und dadurch vergrössert sich der effektive zweite Durchmesser d2. Wenn dieser Druck auf die Oberfläche 16 des zweiten flexiblen Endstücks 9B genügend hoch ist und der effektive zweite Durchmesser d2 ausreichend vergrössert wurde, dann ist die Rohrverbindung 10 fest in dem Inneren des Rohres 20, 20' festgeklemmt. Die Härte des Materiales, aus dem die Rohrverbindung 10 hergestellt ist, bestimmt die Länge 12 und die Höhe h1 des Spaltes 7. Diese Parameter, die Härte des Materiales, die Länge l2 und die Höhe h1 definieren die Flexibilität der flexiblen Endstücken 9A, 9B und deshalb den vergrösserten zweiten effektiven Durchmesser d2. Die Aussenfläche der Zylinderabschnitte 5, 5' und die Innerfläche des Zylindermantels 26 spielen auch eine Rolle für der Festigkeit der Verbindung. Je rauher diese Flächen sind, desto fester ist die Verbindung zwischen den Rohren 20, 20' und der Rohrverbindung 10.
- b) in einer weitere Ausführungsform der Erfindung wird, nach dem die Zylinderabschnitte 5, 5' in das Innere der Rohre 20, 20' eingesteckt worden sind, das Schraubelement 13 nach aussen geschraubt, um es in dem Zylindermantel 26 zu befestigen. Um eine feste Verbindung zu ermöglichen, kann in diesem Fall die Öffnung 24 mit einem Gewinde ausgestattet sein.

Als eine zusätzliche Massnahme kann für den Fall dass die Rauhigkeit der Innenfläche des Zylindermantels 26 nicht genügt, das zweite flexible Endstück 9B mit einer Erhöhung 19 ausgestattet sein, die sich in eine entsprechende Vertiefung des Rohres 20 oder 20' einklemmt. Diese Erhöhung 19 des Endstücks 9B soll aber nicht zu hoch sein, um das Einfügen des Zylinderabschnittes 5 oder 5' in das Innere des Rohres 20 oder 20' nicht zu verhindern, d.h. dass d2 inklusive dieser Erhöhung 19 nicht grösser ist als die Innendurchmesser der Rohre 20, 20', oder wenn er grösser ist, dass dann die Flexibilität der Endstücke 9A, 9B dieser Durchmesserdifferenz entgegenwirken muss.

Fig. 2 zeigt wie in der bevorzugten Ausführungsform der Erfindung, das erste flexible Endstück 9A eine Nut 15 umfasst, die eine Schraubenmutter 17 aufnimmt. Das Schraubelement 13 ist in diese Schraubenmutter 17 einschraubbar. Diese zusätzliche Massnahme ist besonders vorteilhaft wenn das Material, aus dem die Rohrverbindung 10 hergestellt ist, ein weiches Material ist, das ein festes Einschrauben nicht erlaubt. Diese Schraubenmutter 17 ist auch erforderlich wenn es notwendig ist dass die Rohrverbindung 10 wiederverwendbar ist, d.h. wenn die Gewinde nicht ausleiern dürfen.

Figur 3 zeigt die Anwendung der Rohrverbindung 10, nachdem sie in das Innere der Rohre 20, 20' eingesteckt wurde. Auf der linken Seite kann man anhand von Fall a) sehen, dass das Schraubelement 13 eingeschraubt worden ist, um den effektiven zweiten Durchmesser d2 des Zylinderabschnittes zu vergrössern. Auf der rechten Seite ist der Fall b) gezeigt. Hier wurde das Schraubelement 13 etwas herausgeschraubt, um es in dem Zylindermantel 26 zu befestigen.

Fig. 3 zeigt auch wie Nasen 3 in die entsprechenden Ausschnitte 22 an den Stirnenden 21, 21' in den Zylindermantelflächen 26 der jeweiligen Rohre 20, 20' eingreifen. Dieses Merkmal verhindert, dass sich die Rohre 20, 20' gegeneinander verdrehen und es gibt der ganzen Struktur eine grosse Stabilität.

Eine besonders vorteilhaftige Verwendung der Rohrverbindung 10 ist in der Figur 4. gezeigt. Diese Figur zeigt ein Mehrzahl von Rohren 20, 20', die mit einer Mehrzahl von Rohrverbindungen 10 verbunden sind und eine selbstragende Tragekonstruktion 30 bilden. Gemäss Erfindung können solche Tragekonstruktionen eingesetzt werden um Zelte, Sonnenschirme, Pavillons, Messestände oder andere Konstruktionen, wie z.B. Bühnen oder Gerüste, mit länglichen Trägerelementen zu erstellen.

## Patentansprüche

1. Röhrenartige Struktur mit mindestens zwei Rohren (20,20') und einer steckbaren Rohrverbindung (10), wobei die Rohrverbindung (10) ein einstückiges Element ist, das:
o länglich und zylinderförmig ist,
o einen mittleren Abschnitt mit einem umlaufenden Steg (1) umfasst, wobei dieser Steg (1) als axiale Anschlagsfläche für Stirnenden (21, 21') der beiden Rohre (20, 20') dient,
**dadurch gekennzeichnet, dass**:
o die Rohrverbindung (10) im Bereich des Steges (1) auf jeder Seite des Steges (1) mindestens eine Nase (3) aufweist, um in einen entsprechenden Ausschnitt (22) an dem Stirnende (21, 21') des jeweiligen Rohres (20, 20') einzugreifen, wobei durch die in die Ausschnitte (22) eingreifenden Nasen (3) ein Verdrehen der Rohre (20, 20') gegeneinander verhindert wird,
o auf jeder Seite des Steges (1) ein Zylinderabschnitt (5, 5') vorgesehen ist, der in das Innere des jeweiligen Rohres (20, 20') einsteckbar ist,
o jeder Zylinderabschnitt (5, 5') einen axialen Spalt (7) aufweist, der sich von einer Stirnendfläche des Zylinderabschnitts (5, 5') in Richtung des mittleren Abschnitts erstreckt, wobei sich oberhalb und unterhalb des Spaltes ein erstes flexibles Endstück (9A) und ein zweites flexibles Endstück (9B) ergeben, und
o dass das erste flexible Endstück (9A) eine Radialbohrung (11) mit einem Schraubelement (13) zum Festklemmen der Rohrverbindung (10) im Rohr (20, 20') aufweist, wobei das Schraubenelement (13) durch eine Öffnung (24) im Zylindermantel (26) des Rohres (20, 20') zugänglich ist.

2. Struktur nach Anspruch 1, **dadurch gekennzeichnet, dass** die Spalten (7) parallel zu Zylinderlängsachsen der Zylinderabschnitte (5, 5') verlaufen.

3. Struktur nach Anspruch 1 oder 2, **dadurch gekennzeichnet, dass**
o der umlaufende Steg (1) einen ersten Durchmesser (d1) aufweist,
o die Zylinderabschnitte (5, 5') einen zweiten Durchmesser (d2) aufweisen, und
o der erste Durchmesser (d1) grösser ist als der zweite Durchmesser (d2).

4. Struktur nach Anspruch 3, **dadurch gekennzeichnet, dass**
o der erste Durchmesser (d1) ungefähr der Aussendurchmesser eines der Rohre (20, 20') ist,
o der zweite Durchmesser (d2) ungefähr der Innendurchmesser eines der Rohre (20, 20') ist, und
o die Differenz zwischen dem ersten Durchmesser (d1) und dem zweiten Durchmesser (d2) ungefähr gleich ist mit der Dicke des Zylindermantels (26).

5. Struktur nach einem der Ansprüche 1 bis 4, **dadurch gekennzeichnet, dass** das Schraubelement (13) wenn es hineingeschraubt ist die Endstücke (9A, 9B) auseinanderbiegt, und dadurch der effektive zweite Durchmesser (d2) vergrössert wird, um die Rohrverbindung (10) in dem Rohr (20, 20') festzuklemmen.

6. Struktur nach einem der Ansprüche 1 bis 4, **dadurch gekennzeichnet, dass** sich das Schraubelement (13) von dem Zylinderabschnitt (5, 5') durch die Öffnung (24) in den Zylindermantel (26) erstreckt, um die Rohrverbindung (10) in dem Rohr (20, 20') festzuklemmen.

7. Struktur nach einem der Ansprüche 1 bis 6, **dadurch gekennzeichnet, dass** das erste flexible Endstück (9A) eine Nut (15) umfasst, die eine Schraubenmutter (17) aufnimmt, in die das Schraubelement (13) einschraubbar ist.

8. Struktur nach einem der Ansprüche 1 bis 7, **dadurch gekennzeichnet, dass** das zweite Endstück (9B) eine Erhöhung (19) umfasst, die in eine entsprechende Vertiefung des Rohres (20, 20') einklemmbar ist.

9. Struktur nach einem der Ansprüche 1 bis 7, **dadurch gekennzeichnet, dass** eine Mehrzahl von Rohren (20, 20') mit Rohrverbindungen (10) verbunden ist, um eine selbsttragende Tragkonstruktion (30) zu bilden.

10. Zelt oder Gerüst mit mindestens einer Struktur nach einem der Ansprüche 1 bis 7.

## Claims

1. Tube-like structure comprising at least two pipes (20, 20') and a pluggable pipe connection (10), wherein the pipe connection (10) is an integrally formed element which:
- is oblong and cylindrical,
- comprises a middle section comprising a circumferential rib (1), wherein this rib (1) serves as an axial locating surface for front ends (21, 21') of the two pipes (20, 20'),
**characterized in that**
- the pipe connection (10) has at least one nose (3) in the area of the rib (1) on each side of the rib (1) so as to engage in a corresponding cutout (22) at the front end (21, 21') of the respective pipe (20, 20'), wherein a turning out of position of the pipes (20, 20') with respect to each other is avoided by the noses (3) engaging in the cutouts (22),
- a cylinder section (5, 5') that is pluggable into the interior of the respective pipe (20, 20') is conceived on each side of the rib (1),
- each cylinder section (5, 5') has an axial slit (7) which extends from a front end surface of the cylinder section (5, 5') in the direction of the middle section, whereby a first flexible end piece (9A) and a second flexible end piece (9B) result above and below the slit, and
- **in that** the first flexible end piece (9A) has a radial borehole (11) with a bolt element (13) for clamping the pipe connection (10) in the pipe (20, 20'), wherein the bolt element (13) is accessible through an opening (24) in the cylinder barrel (26) of the pipe (20, 20').

2. Structure according to claim 1, **characterized in that** the slits (7) run parallel to longitudinal cylinder axes of the cylinder sections (5, 5').

3. Structure according to claim 1 or 2, **characterized in that** the
- the circumferential rib (1) has a first diameter (d1),
- the cylinder sections (5, 5') have a second diameter (d2), and
- the first diameter (d1) is greater than the second diameter (d2).

4. Structure according to claim 3, **characterized in that** the
- the first diameter (d1) is about the outer diameter of one of the pipes (20, 20'),
- the second diameter (d2) is about the inner diameter of one of the pipes (20, 20'), and
- the difference between the first diameter (d1) and the second diameter (d2) is about equal to the thickness of the cylinder barrel (26).

5. Structure according to any one of the claims 1 to 4, **characterized in that** the bolt element (13), when it is screwed in, flexes the end pieces (9A, 9B) apart and thus the effective second diameter (d2) is increased so as to clamp the pipe connection (10) in the pipe (20, 20').

6. Structure according to any one of the claims 1 to 4, **characterized in that** the bolt element (13) extends from the cylinder section (5, 5') through the opening (24) into the cylinder barrel (26) so as to clamp the pipe connection (10) in the pipe (20, 20').

7. Structure according to any one of the claims 1 to 6, **characterized in that** the first flexible end piece (9A) comprises a groove (15) which accommodates a screw nut (17), into which the bolt element (13) can be screwed in.

8. Structure according to any one of the claims 1 to 7, **characterized in that** the second end piece (9B) comprises a raising (19) which can be clamped in a corresponding indentation of the pipe (20, 20').

9. Structure according to any one of the claims 1 to 7, **characterized in that** a plurality of pipes (20, 20') is connected using pipe connections (10) so as to form a self-supporting supporting structure (30).

10. Tent or skeleton comprising at least one structure according to any one of the claims 1 to 7.

## Revendications

1. Structure tubulaire comprenant au moins deux tubes (20, 20') et un raccord tubulaire (10) enfichable, cependant le raccord tubulaire (10) est un élément d'un seul tenant lequel:
- est oblong et cylindrique,
- comprend une section moyenne comprenant une âme (1) périphérique, cependant cette âme (1) sert comme une surface d'arrêt axiale pour des bout de front (21, 21') des deux tubes (20, 20'),
**caractérisée en ce que**
- le raccord tubulaire (10) comprend au moins un nez (3) dans la région de l'âme (1) à chaque flanc de l'âme (1), afin de s'encliqueter dans une découpure (22) correspondante au bout de front (21, 21') du tube (20, 20') respectif, cependant une torsion des tubes (20, 20') l'un contre l'autre est empêchée moyennant les nez (3) s'encliquetant dans les découpures (22),
- une section cylindrique (5, 5') laquelle est enfichable dans l'intérieur du tube (20, 20') respectif est pourvue à chaque flanc de l'âme (1),
- chaque section cylindrique (5, 5') comprend une fente (7) axiale, laquelle s'étend d'une surface du bout de front de la section cylindrique (5, 5') dans la direction de la section moyenne, cependant une première pièce de bout (9A) flexible et une deuxième pièce de bout (9B) flexible résultent au-dessus et au-dessous de la fente, et
- **en ce que** la première pièce de bout (9A) comprend un alésage (11) radial avec un élément de vis (13) pour coincer le raccord tubulaire (10) dans le tube (20, 20'), cependant l'élément de vis (13) est accessible à travers une ouverture (24) dans l'enveloppe cylindrique (26) du tube (20, 20').

2. Structure selon la revendication 1, **caractérisée en ce que** les fentes (7) s'étendent parallèle à des axes longitudinale du cylindre de la section cylindrique (5, 5').

3. Structure selon la revendication 1 ou 2, **caractérisée en ce que**
- l'âme (1) périphérique a un premier diamètre (d1),
- les sections cylindriques (5, 5') ont un deuxième diamètre (d1), et
- le premier diamètre (d1) est plus grand que le deuxième diamètre (d2).

4. Structure selon la revendication 3, **caractérisée en ce que**
- le premier diamètre (d1) est à peu près le diamètre extérieur d'un des tubes (20, 20'),
- le deuxième diamètre (d2) est à peu près le diamètre intérieur d'un des tubes (20, 20'), et
- la différence entre le premier diamètre (d1) et le deuxième diamètre (d2) est à peu près l'épaisseur de l'enveloppe cylindrique (26).

5. Structure selon quelques unes des revendications 1 à 4, **caractérisée en ce que** l'élément de vis (13), quand il est visé dedans, cintre les pièces de bout (9A, 9B) l'une de l'autre et ainsi le deuxième diamètre (d2) effectif est agrandi afin de coincer le raccord tubulaire (10) dans le tube (20, 20').

6. Structure selon quelques unes des revendications 1 à 4, **caractérisée en ce que** l'élément de vis (13) s'étend de la section cylindrique (5, 5') à travers l'ouverture (24) dans l'enveloppe cylindrique (26) afin de coincer le raccord tubulaire (10) dans le tube (20, 20').

7. Structure selon quelques unes des revendications 1 à 6, **caractérisée en ce que** la première pièce de bout (9A) flexible comprend une rainure (15), laquelle héberge un écrou (17), dans lequel l'élément de vis (13) peut être visé.

8. Structure selon quelques unes des revendications 1 à 7, **caractérisée en ce que** la deuxième pièce de bout (9B) comprend une surélévation (19), laquelle peut se coincer dans une empreinte correspondante du tube (20, 20').

9. Structure selon quelques unes des revendications 1 à 7, **caractérisée en ce qu'**une pluralité de tubes (20, 20') est raccordée moyennant des raccords tubulaire (10) afin de former une construction de soutien (30) autoporteuse.

10. Tente ou châssis comprenant au moins une structure selon quelques unes des revendications 1 à 7.
